Europäisches Patentamt

European Patent Office

Office européen des brevets

(11) Publication number: **0 278 221 B1**

# EUROPEAN PATENT SPECIFICATION

(45) Date of publication of patent specification: **02.10.91**

(51) Int. Cl.⁵: **C21B 7/16**, C21B 5/00, F23D 1/00

(21) Application number: **88100169.7**

(22) Date of filing: **08.01.88**

(54) **Tuyere of blast furnace.**

(30) Priority: **09.01.87 JP 1856/87**

(43) Date of publication of application:
**17.08.88 Bulletin 88/33**

(45) Publication of the grant of the patent:
**02.10.91 Bulletin 91/40**

(84) Designated Contracting States:
**DE FR GB IT**

(56) References cited:
**EP-A- 0 026 509      WO-A-86/05520
DE-A- 3 334 156      FR-A- 1 259 738
FR-A- 2 111 135      FR-A- 2 120 474
GB-A- 2 150 155      GB-A- 2 165 633
LU-A- 39 431         US-A- 1 518 854
US-A- 2 650 161**

(73) Proprietor: **NIPPON KOKAN KABUSHIKI
KAISHA
1-2 Marunouchi 1-chome Chiyoda-ku
Tokyo 100(JP)**

(72) Inventor: **Hotta, Hirohisa Patent & License
Qual. Stand.Dept.
Nippon Kokan Kab. Kaisha 1-2, 1-chome
Marunouchi
Chiyoda-ku Tokyo(JP)**
Inventor: **Oono, Yotaro Patent & License Qual.
Stand. Dept.
Nippon Kokan Kab. Kaisha 1-2, 1-chome
Marunouchi
Chiyoda-ku Tokyo(JP)**
Inventor: **Matsuura, Masahiro Patent&License
Qual.Stand.Dept.
Nippon Kokan Kab. Kaisha 1-2, 1-chome
Marunouchi
Chiyoda-ku Tokyo(JP)**

(74) Representative: **Ritter und Edler von Fischern,
Bernhard,Dipl.-Ing. et al
HOFFMANN - EITLE & PARTNER Arabel-
lastrasse 4
W-8000 München 81(DE)**

Rank Xerox (UK) Business Services

## Description

The present invention relates to a structure of a tuyere of a blast furnace for making a pig iron, and, in particular, to a structure of a tuyere of a blast furnace for blowing in pulverized coal.

Recently, to improve productivity of a blast furnace or to make use of furnace top gas as material for synthetic chemical industry, various methods of allowing oxygen to be a major constituent of blast gas have been proposed. A Japanese Examined Patent Publication (KOKOKU) No. 32323/77 discloses blowing in concentrated oxygen and gas reformed from furnace top gas. Another method is disclosed in a Japanese Patent Application Laid Open (KOKAI) No. 159104/85 wherein oxygen and $H_2O$ or $CO_2$ as tuyere nose flame temperature control agent are blown in through tuyeres and, at the same time, gas which is free from $N_2$ is blown in through an intermediate level of a blast furnace. In the specification of this patent application, blow-in of pulverized coal of 100kg/ton., pig molten iron is disclosed, but there is no description of a method for blowing in pulverized coal. Furthermore, in a prior art blast furnace, pulverized coal is injected in together with an appropriate carrier gas through hole openings of tuyeres, but the prior art method has difficulty in burning the pulverized coal in a large amount.

FR-A-1 259 738 describes a burner located in a tuyere of a blast furnace, the burner including passages for pulverised coal and oxygen gas. Air can also be supplied between the outside of the burner and the inside of the tuyere and may be used for controlling the temperature of the tuyere nose flame. The burner is water-cooled.

It is an object of the present invention to provide a tuyere which allows a large amount of pulverized coal to combust perfectly and further which allows replacement of a troublesome oxygen burner quickly and exactly.

The object of the invention is solved by an apparatus for blowing pulverized coal into a blast furnace, having a water-cooled tuyere, a burner mounted inside of said water-cooled tuyere for burning pulverized coal; and a water-cooled jacket arranged outside of the top end of said burner, **characterized** in that said water-cooled jacket has an outer surface fitted closely against an inner surface of the water-cooled tuyere.

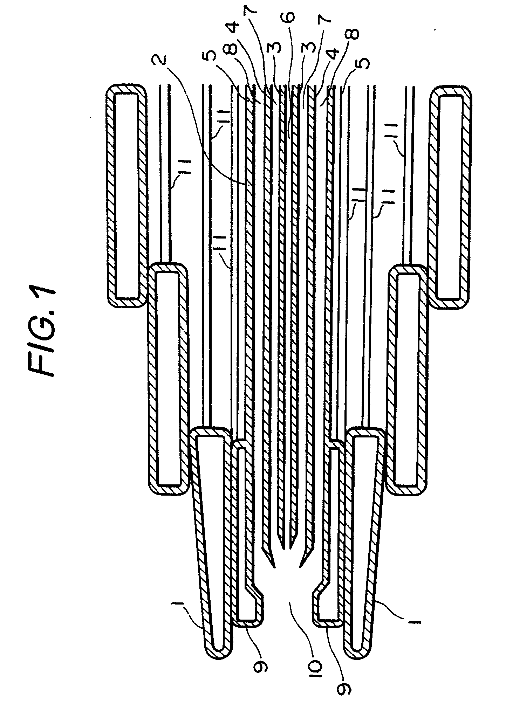

Fig. 1 is a vertical sectional view showing an embodiment of a tuyere of a blast furnace according to the present invention.

With reference to Fig. 1, an embodiment of a tuyere of a blast furnace of the present invention will now be described. Burner 2 is fitted inside a water-cooled tuyere 1. Burner 2 is composed of inner pipe 3, intermediate pipe 4 and outer pipe 5, having almost a common center axis and of water-cooled jacket 9 set at the top end of burner 2. Pulverized coal feed path 6 is inside inner pipe 3, oxygen feed path 7 is in between inner pipe 3 and intermediate pipe 4 and tuyere nose flame temperature control gas feed path 8 in between intermediate pipe 4 and outer pipe 5. Through oxygen path 7, gas of 40 vol.% or more oxygen passes. Through tuyere nose flame temperature control gas feed path 8, passes any one selected from the group consisting of circulated blast furnace gas, $CO_2$ gas and steam. Water-cooled jacket 9 is arranged closely together to the inner surface of the water-cooled tuyere which keeps the inside of a blast furnace tightly sealed. At the top end of burner 2, jet-out opening 10 is arranged so as to jet out pulverized coal, oxygen and tuyere nose flame temperature control gas into a blast furnace in a state of being perfectly mixed. Owing to this perfect mixing, the pulverized coal is perfectly combusted. Water-cooled tuyere 1 and jacket 9 are cooled by water supplied through cooling water feed pipe 11.

The reason why allowing water-cooled tuyere 1 and water-cooled jacket 9 set at the top end of burner 2 to be overlappedly set is advantageous will be now described. A tuyere through which oxygen and tuyere nose flame temperature control gas are blown in brings about comparatively few troubles in operation, whereas a tuyere through which oxygen, tuyere nose flame temperature control gas and pulverized coal are blown in is apt to bring about troubles in operation. In this respect, the overlapped tuyere structure realizes minimized trouble occurence and also allows replacement of a troublesome burner with another burner in a short time and exactly when trouble occurs.

Lastly, a method of operating a blast furnace by using the tuyere with the overlapped structure of the present invention will be described. Iron ores and cokes are charged through a furnace top into a blast furnace. Through the tuyere set in at the lower part of the blast furnace, gas of 40 vol.% or more oxygen, tuyere nose flame temperature control gas and pulverized coal are blown in into the blast furnace. Through blow-in inlets set in a furnace shaft, preheating gas is introduced into the blast furnace, and burdens charged into the blast furnace are preheated. Through the mentioned process, thanks to oxygen blown in through the tuyere, cokes and pulverized coal are perfectly combusted, and, the reducing gas thus generated therefrom melts and reduces the iron ores into molten pig iron and slag. As described in the foregoing, when a tuyere which has a structure of the present invention is used for blowing in pulverized coal in operation as usual, the tuyere gives not only the effect of perfect combustion of pulverized coal but also allows replacement of a troublesome oxygen burner quickly and exactly.

**Claims**

1. An apparatus for blowing pulverized coal into a blast furnace, having a water-cooled tuyere (1),
    a burner (2) mounted inside of said water-cooled tuyere for burning pulverized coal; and
    a water-cooled jacket (9) arranged outside of the top end of said burner, **characterized** in that
    said water-cooled jacket (9) has an outer surface fitted closely against an inner surface of the water-cooled tuyere (1).

2. The apparatus of claim 1,
    **characterized** in that
    said burner (2) includes having a feed path (6) for the pulverized coal and a feed path for oxygen gas (7) and a feed path (8) for tuyere nose flame temperature control gas.

3. The apparatus of claim 2,
    **characterized** in that
    said burner (2) includes having an inner pipe (3), an intermediate pipe (4) and an outer pipe (5) which are all concentrically arranged so as to form concentric space apart circles in cross section, an inner feed path (6) for the pulverized coal being formed by an inner space of the inner pipe, an intermediate feed path (7) for oxygen gas being formed by a space between an inner pipe and the intermediate pipe and an outer feed path (8) for the tuyere nose flame temperature gas being formed by a space between the intermediate pipe and the outer pipe.

4. The apparatus of any one of claims 1 to 3,
    **characterized** in that
    said burner (2) includes a jet-out opening (10) mixing the pulverized coal with oxygen gas and the tuyere nose flame temperature control gas.

**Revendications**

1. Appareil pour souffler du charbon pulvérisé dans un haut fourneau, comportant une tuyère (1) refroidie à l'eau,
    un brûleur (2) monté à l'intérieur de ladite tuyère refroidie à l'eau pour brûler le charbon pulvérisé; et
    une enveloppe (9) refroidie à l'eau disposée à l'extérieur de l'extrémité de tête dudit brûleur, caractérisé par le fait que ladite enveloppe (9) refroidie à l'eau a sa surface extérieure placée, à ajustement serré, contre la surface intérieure de la tuyère (1) refroidie à l'eau.

2. Appareil de la revendication 1,
    caractérisé
    par le fait que ledit brûleur (2) comporte un chemin d'amenée (6) pour le charbon pulvérisé et un chemin d'amenée pour le gaz oxygène (7) et un chemin d'amenée (8) pour le gaz de contrôle de la température de la flamme au nez de la tuyère.

3. Appareil de la revendication 2,
    caractérisé
    par le fait que ledit brûleur (2) comporte une conduite intérieure (3), une conduite intermédiaire (4) et une conduite extérieure (5) qui sont toutes disposées concentriquement de façon à former en section droite des cercles concentriques espacés l'un de l'autre, un chemin d'amenée intérieur (6) pour le charbon pulvérisé étant formé par un espace intérieur de la conduite intérieure, un chemin d'amenée intermédiaire (7) pour le gaz oxygène étant formé par un espace situé entre une conduite intérieure et la conduite intermédiaire et un espace d'amenée extérieur (8) pour le gaz de contrôle de la température de la flamme au nez de la tuyère étant formé par un espace situé entre la conduite intermédiaire et la conduite extérieure.

4. Appareil selon l'une quelconque des revendications 1 à 3,
    caractérisé
    par le fait que ledit brûleur (2) comporte une ouverture d'injection (10) qui mélange le charbon pulvérisé avec le gaz oxygène et avec le gaz de contrôle de la température de la flamme au nez de la tuyère.

**Patentansprüche**

1. Vorrichtun zum Einblasen pulverisierter Kohle in einen Hochofen mit einer wassergekühlten Blasdüse (1),

    einem Brenner (2), der innerhalb der wassergekühlten Blasdüse zum Verbrennen der pulverisierten Kohle angebracht ist; und

    einer wassergekühlten Verkleidung (9), die außerhalb des oberen Endes des Brenners angeordnet ist,

    dadurch **gekennzeichnet**, daß

die wassergekühlte Verkleidung (9) eine äußere Oberfläche besitzt, die eng an eine innere Oberfläche der wassergekühlten Blasdüse (1) angepaßt ist.

2. Vorrichtung nach Anspruch 1,
dadurch **gekennzeichnet,** daß
der Brenner (2) einen Zuführpfad für die pulverisierte Kohle und einen Zuführpfad für Sauerstoffgas (7) und einen Zuführpfad (8) für Blasdüsen-Mündungsflammentemperatur-Steuergas aufweist.

3. Vorrichtung nach Anspruch 2,
dadurch **gekennzeichnet,** daß
der Brenner (2) ein inneres Rohr (3), ein Zwischenrohr (4) und ein äußeres Rohr (5) aufweist, die alle konzentrisch angeordnet sind, um konzentrisch beabstandete Kreise im Querschnitt zu bilden, wobei ein innerer Zuführpfad (6) für die pulverisierte Kohle durch einen inneren Raum des inneren Rohres gebildet wird, wobei ein Zwischenzuführpfad (7) für Sauerstoffgas durch einen Zwischenraum zwischen einem inneren Rohr und dem Zwischenrohr gebildet wird und wobei ein äußerer Zuführpfad für das Blasdüsen-Mündungsflammentemperatur-Gas durch einen Zwischenraum zwischen dem Zwischenrohr und dem äußeren Rohr gebildet wird.

4. Vorrichtung nach einem der Ansprüche 1 bis 3,
dadurch **gekennzeichnet,** daß
der Brenner (2) eine Ausstoßöffnung (10) umfaßt, die die pulverisierte Kohle mit dem Sauerstoffgas und dem Blasdüsen-Mündungsflammentemperatur-Steuergas mischt.

FIG. 1

EP 0 278 221 B1